## Europäisches Patentamt
## European Patent Office
## Office européen des brevets

(19)

(11) Publication number : **0 039 838**
**B2**

(12) # NEW EUROPEAN PATENT SPECIFICATION

(45) Date of publication of the new patent specification :
02.11.89

(21) Application number : 81103240.8

(22) Date of filing : 29.04.81

(51) Int. Cl.⁴ : **C 08 G 63/52**, **A 01 G 9/14**,
**C 08 L 67/06**

(54) Greenhouse.

(30) Priority : 30.04.80 JP 56188/80
23.05.80 JP 67783/80
20.06.80 JP 82920/80

(43) Date of publication of application :
18.11.81 Bulletin 81/46

(45) Publication of the grant of the patent :
11.07.84 Bulletin 84/28

(45) Mention of the opposition decision :
02.11.89 Bulletin 89/44

(84) Designated contracting states :
DE GB NL SE

(56) References cited :
US—A— 2 944 994
CHEMICAL ABSTRACTS, vol. 90, no. 4, January 1979,
page 38, abstract no. 24266a COLUMBUS, Ohio (US)
Selden, Glasfaserverstaerkte Kunstoffe, Springer
Verlag 1967,p 8-11, 28-31,50-53
Lane, Glasfaserverstaerkte Polyester und andere
Duromere Zechner und Huetting Verlag, 1969, p
185,186
Dean et al, Modern Plastics,32, Feb 1955, pp.131 and
138
Mohler , Das Absorbtionsspektrum der chemische
Bindung, Verlag G. Fischer, Jena, 1943, p.112
Silverstein et al, Spectrometric Identification ofOrga-
nic Compounds, 2nd Ed, Wiley, 1967, p.155
Zvonar, Lichtbestaendigkeit von Dackdeckungen aus
Polyester, Chemicky Prumysl, 1960, p.611-612 (deuts-
che Uebersetzung)
Zvonar, Lichtbestaendigkeit von Dackdeckungen aus
Polyester, Chemicky Prumysl, 1960, p.611-612 (deuts-
che Uebersetzung)
Shinbunscha. Lecture on plastic materials 1970p. 73

(73) Proprietor : **DAINIPPON INK AND CHEMICALS, INC.**
**35-58, Sakashita 3-chome**
**Itabashi-ku, Tokyo 174 (JP)**

(72) Inventor : **Togo, Masamichi**
**2-7-10, Higashihagoromo**
**Takaishi-shi Osaka-fu (JP)**
Inventor : **Miyagawa, Yukio**
**7, Shio-machi Amagasaki-shi**
**Hyogo-ken (JP)**
Inventor : **Hiraishi, Shunichi**
**3-19-7, Wakamatsudai**
**Sakai-shi Osaka-fu (JP)**

(74) Representative : **Glaeser, Joachim, Dipl.-Ing.**
**Patentanwalt Flüggenstrasse 13**
**D-8000 München 19 (DE)**

## Description

This invention relates to a greenhouse with panels obtained by molding a glass fiber-reinforced unsaturated polyester resin composition having excellent ultraviolet-transmissibility reinforced panel. More specifically, the glass fiber reinforced composition comprises an unsaturated polyester resin which is produced without using an aromatic polybasic acid and an aromatic polyhydric alcohol as starting materials.

Molded articles of glass fiber-reinforced resins in the form of a corrugated or flat plate produced from an unsaturated polyester resin and glass fibers have been widely used as building materials, such as lighting windows of factories and panels of agricultural houses because of their various advantages such as lighter weight and higher impact strength than glass articles, rapid producibility, and low costs.

Since, however, unsaturated polyester resins are generally derived from aromatic polybasic acids as raw materials, cured products thereof have very low ultraviolet-transmissibility, and poor weatherability in outdoor service.

Various methods have been investigated heretofore for removing these defects of unsaturated polyester resin compositions. For example, a method was proposed which involves adding an ultraviolet absorber to an unsaturated polyester resin. Molded plates prepared in accordance with this method have improved weatherability, but because they are substantially non-transmissible to ultraviolet rays, are unsuitable for panels in agricultural and sanitary applications which require transmission of ultraviolet rays. A method was also suggested in which a (meth)acrylic resin is mainly used as a resin composition. According to this method, ultraviolet-transmissibility and weatherability are improved, but the curing time is much longer than in the case of using an unsaturated polyester resin, and productivity in commercial applications is drastically reduced. In addition, cured products obtained by this method are brittle and because of their poor adhesion to glass fibers, whitening occurs in the interface between the resin and the glass fibers and the transparency of the product is markedly reduced.

It is an object of this invention therefore to provide a greenhouse with panels obtained by molding a resin composition capable of producing molded articles, particularly plate-like molded articles, having excellent ultraviolet-transmissibility, weatherability and transparency.

We have now found that molded articles having excellent ultraviolet-transmissibility, weatherability and transparency can be obtained by preparing an unsaturated polyester resin from a vinyl monomer and an unsaturated polyester obtained by using maleic acid or maleic anhydride and/or fumaric acid and another aliphatic polybasic acid and/or an alicyclic polybasic acid without an aromatic polybasic acid as an acid component and an aliphatic polyhydric alcohol and/or an alicyclic polyhydric alcohol without an aromatic polyhydric alcohol as an alcohol component, impregnating glass fibers with the resulting unsaturated polyester resin, and curing the resulting composition.

According to this invention, there is provided a greenhouse with panels obtained by molding a glass fiber-reinforced composition comprising [I] an unsaturated polyester resin and [II] glass fibers, said unsaturated polyester resin [I] being composed of (A) 50 to 80 % by weight of an unsaturated polyester prepared from an acid component consisting of 10 to 60 mole% of maleic acid or maleic anhydride and/or fumaric acid and 90 to 40 mole% of another aliphatic polybasic acid and/or an alicyclic polybasic acid and an alcohol component composed of an aliphatic polyhydric alcohol and/or an alicyclic polyhydric alcohol, and (B) 50 to 20 % by weight of an aromatic vinyl monomer or a mixture of it with an acrylic or methacrylic monomer.

Plate-like molded articles produced from this composition have excellent ultraviolet transmissibility, weatherability and transparency, and can be advantageously used, for example, as panels of greenhouses.

Dicarboxylic acids are usually employed as the other aliphatic polybasic acid than maleic acid or maleic anhydride and fumaric acid and the alicyclic polybasic acid. Dicarboxylic acids having not more than 10 carbon atoms are preferred. A tri- or higher carboxylic acid is preferably used in combination with the dicarboxylic acid. Examples of such polybasic acids include aliphatic dicarboxylic acids such as adipic acid, succinic acid, azelaic acid and sebacic acid and lower alkyl esters thereof; alicyclic dicarboxylic acids and lower alkyl esters thereof, such as hexahydrophthalic anhydride, methylhexahydrophthalic anhydride, and dimethyl 1,4-cyclohexanedicarboxylate.

The aliphatic polyhydric alcohol and alicyclic polyhydric alcohol preferably have 2 to 15 carbon atoms. Examples include aliphatic polyhydric alcohols such as ethylene glycol, propylene glycol, 1,4-butadeniol, 1,3-butanediol, 2,3-butanediol, diethylene glycol, dipropylene glycol, triethylene glycol, 1,5-pentanediol, 1,6-hexanediol, neopentyl glycol, 2,2,4-trimethylpentanediol, 1,3-pentaerythritol diallyl ether, glycerol, trimethylene glycol, 2-ethyl-1,3-hexanediol, allyl glycidyl ether, trimethylolmethane and trimethylolpropane; and alicyclic polyhydric alcohols such as 1,4-cyclohexane dimethanol and hydrogenated bisphenol A.

The proportion of maleic acid or maleic anhydride and/or fumaric acid in the acid component is 10 to 60 mole%, preferably 20 to 50 mole%. If the proportion is less than 10 mole%, the mechanical strength of a molded article prepared from the resulting resin composition is reduced. It is larger than 60 mole%, the molded article has reduced transmissibility to ultraviolet rays.

The unsaturated polyester prepared from the aforesaid acid component and polyhydric alcohol

2

component preferably has an acid value of 10 to 60, a hydroxyl value of 30 to 70 and a molecular weight per double bond factor of 300 to 1 300.

The aromatic vinyl monomer includes, for example, styrene, divinylbenzene, vinyltoluene, t-butylstyrene and α-methylstyrene. Examples of the acrylic or methacrylic monomer are acrylic acid esters such as methyl acrylate, ethyl acrylate, propyl acrylate, butyl acrylate, octyl acrylate, 2-ethylhexyl acrylate, cyclohexyl acrylate, dodecyl acrylate, octadecyl acrylate, glycidyl acrylate and 2-hydroxyethyl acrylate ; methacrylic acid esters such as methyl methacrylate, ethyl methacrylate, propyl methacrylate, butyl methacrylate, hexyl methacrylate, octyl methacrylate, 2-ethylhexyl methacrylate, dodecyl methacrylate, octadecyl methacrylate, 1,6-hexanediol dimethacrylate, trimethylolpropane trimethacrylate, glycidyl methacrylate and 2-hydroxyethyl methacrylate ; unsaturated carboxylic acids such as acrylic acid and methacrylic acid ; and unsaturated nitriles such as acrylonitrile and methacrylonitrile. At least one such acrylic or methacrylic monomer is used in combination with the aforesaid aromatic vinyl monomer. The suitable proportion of the acrylic or methacrylic monomer is 50 to 0.5 % by weight as against 50 to 99.5 % by weight of the aromatic vinyl monomer. If the amount of the vinyl aromatic monomer is less than 50 % by weight, an unsaturated bond of the maleic acid (or fumaric acid) ester type remains in the cured product, and therefore the cured product has reduced ultraviolet transmissibility and weatherability. The acrylic or methacrylic monomer in the amounts within the specified range is suitable for adjusting the refractive index of the resulting unsaturated polyester resin [I] to 1.495-1.538.

The unsaturated polyester resin [I] used in this invention comprises 50 to 80 % by weight, preferably 65 to 75 % by weight, of the unsaturated polyester (A) and 50 to 20 % by weight, preferably 35 to 25 % by weight, of the aromatic vinyl monomer or its mixture with the acrylic or methacrylic monomer. These quantitative ranges have been determined by considering the impregnating of the resin [I] during molding, prevention of unevenness in thickness of the molded articles, etc.

The unsaturated polyester resin [I] preferably has a refractive index of 1.495 to 1.538 so as to achieve better ultraviolet transmissibility, weatherability and transparency. It is desirable however to select an unsaturated polyester resin [I] having an optimum refractive index within the aforsaid range depending upon the refractive index of the glass fibers used. Specifically, when glass fibers, particularly C-glass, having a refractive index of 1.512 to 1.535 are used, resins [I] having a refractive index of 1.495 to 1.510 are suitable ; when glass fibers having a refractive index of 1.536 to 1.545 are used, resins [I] having a refractive index of 1.511 to 1.520 are suitable ; and when glass fibers, particularly E-glass, having a refractive index of 1.546 to 1.557 are used, resins [I] having a refractive index of 1.521 to 1.538 are suitable.

Normally, the unsaturated polyester resin [I] is liquid, and in order to cure it, a catalyst is added. Aliphatic or alicyclic organic peroxides such as t-butyl peracetate, t-butyl perpivalate, t-butyl perisobutyrate, diisopropyl peroxydicarbonate and dimethoxybutyl peroxycarbonate are preferred as such a curing catalyst because a molded article having excellent ultraviolet transmissibility can be provided. The amount of the curing catalyst is usually 0.5 to 2 % by weight.

The glass fibers [II] used in the composition of this invention usually have a refractive index of 1.512 to 1.557. For example, C-glass (chemical glass) and E-glass (electrical glass) are suitable. These glass fibers are in the form of, for example, rovings, chopped strands, mats, cloths, etc., but are not limited thereto. The amount of the glass fibers [II] is 10 to 40 % by weight, preferably 15 to 30 % by weight, as against 90 to 60 % by weight, preferably 85 to 70 % by weight, or the unsaturated polyester resin [I].

The resulting composition comprising the unsaturated polyester resin [I] and the glass fibers [II] is molded in a customary manner, and cured at room temperature to 130 °C, preferably 80 to 120 °C. Curing with redox systems comprising organic peroxides and organometallic salts is not desirable as it results in a marked deterioration in ultraviolet transmissibility of the molded articles.

It is possible to bond an ultraviolet-transmissible film of a fluorocarbon resin such as polyvinyl fluoride and a tetrafluoroethylene-hexafluoropropylene copolymer to the surface of a molded article prepared from the composition of this invention, or to gel-coat its surface with the unsaturated polyester resin [I] used in. the invention or an ultraviolet-transmissible acrylic resin. Bonding of such a film, or gel coat treatment is beneficial because the glass fibers are prevented from appearing on the surface of the molded article in outdoor exposure. The suitable thickness of the film or the gel coat layer is 10 to 50 microns.

The composition as used for the panels of the greenhouse of this invention is useful for producing clear glass fiber-reinforcing panels having ultraviolet transmissibility, weatherability and transparency. These panels are conveniently used for agricultural applications, especially as lighting panels of agricultural or horticultural greenhouses.

The use of such panels in a greenhouse is described below at some length.

A clear glass fiber-reinforced panel (to be abbreviated FRP panel) can be obtained by impregnating the unsaturated polyester resin [I] containing a peroxide added thereto in a glass fiber mat [II], and then curing the prepreg at a temperature of 60 to 130 °C, preferably 80 to 120 °C, using, for example, a conventional machine for continuously producing corrugated or flat plates. The shape of the FRP panel is not limited to a flat or corrugated shape. The suitable thickness of the FRP panel for greenhouses is 0.4 to 2.0 mm, preferably 0.6 to 1.2 mm, in view of its relation to ultraviolet transmissibility and mechanical strength. The suitable content of glass fibers is 10 to 40 % by weight, preferably 15 to 30 % by weight.

The framework for supporting such an FRP panel may be built by using pipes, flat plates, or staffs

3

having an H-shaped, U-shaped or L-shaped cross section, made of such a material as iron, aluminum, wood and FRP.

The greenhouse in accordance with this invention is built by constructing a framework using such frame members, and securing the aforesaid FRP panel to the framework. The structure of the greenhouse may, for example, be of a single ridge or multiple ridge type, and the position and structure of the top lighting windows and side windows may be same as those existing in conventional greenhouses. In addition to the FRP panel, another panel may partly be used together.

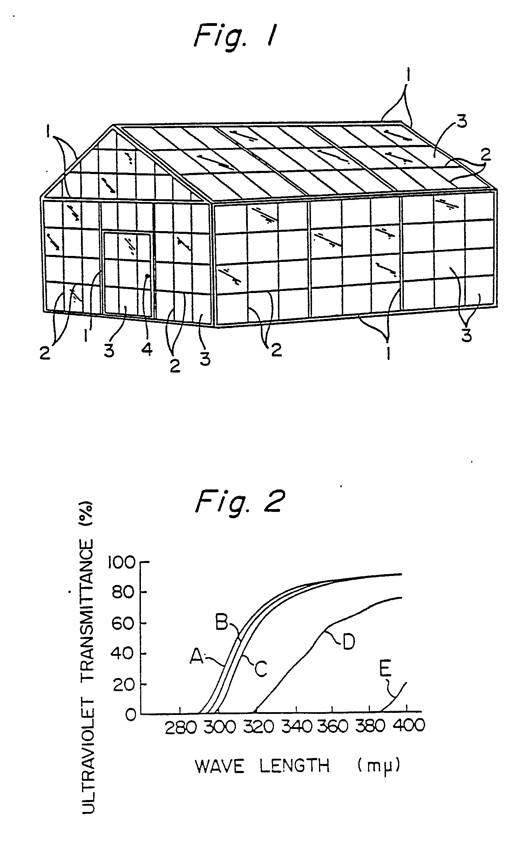

Figure 1 of the accompanying drawings is a perspective view showing roughly the greenhouse of this invention. The greenhouse is built by placing the FRP panel on a framework assembled by using frame members 1 supporting the entire structure and frame members 2 for holding the FRP panel 3, and fixing the FRP panel at the frame members 2. The reference numeral 4 represents a door handle.

The greenhouse of this invention is suitable for cultivating such vegetables as eggplants and primula and does not prevent the pollinating activities of bees because the FRP panel permits transmission of ultraviolet rays and visible light. The ultraviolet transmissibility of the FRP panel is also effective for preventing abnormal growth of pathogenic bacteria or molds in plants within the greenhouse. Furthermore, the greenhouse of the invention can withstand long-term use because of the excellent weatherability of the FRP panel.

The following Examples illustrate the present invention more specifically. All parts in these examples are by weight.

## Example 1

A reactor equipped with a condenser and a stirrer was charged with 60 parts of hydrogenated bisphenol A (HBPA), 3 parts by propylene glycol (PG), 29 parts of methylhexahydrophthalic anhydride (Me-HHPA) and 8 parts of maleic anhydride (MA), and these materials were heated to 200 °C while blowing nitrogen into the reactor from an opening near its bottom. When the reaction proceeded until the acid value of the product reached 45, 50 ppm of hydroquinone was added. Then, the mixture was diluted with styrene (SM) so that the proportion of styrene became 35 % based on the weight of the entire mixture, thereby giving an unsaturated polyester resin (No. 1).

In a similar manner, unsaturated polyester Nos. 2 to 4 shown in Table 1 were obtained. In Table 1, PA stands for phthalic anhydride ; HHPA, for hexahydrophthalic anhydride ; and MMA, for methyl methacrylate.

To each of these unsaturated polyester resins was added 1 % by weight of t-butyl perpivalate. After deaeration, the mixture was impregnated in a chopped strand glass mat (E-glass : alkali-free glass made by Asahi Fiber Glass Co., Ltd. ; 300 g/m²). The prepreg was cured in a hot air dryer at 90 °C for 20 minutes to produce a flat FRP panel having a thickness of 1 mm and a glass content of 25 % by weight. The ultraviolet transmittance of the resulting FRP panel at ultraviolet-transmissible wavelengths and 320 mμ was measured by using an integral spectrophotometer (EPS-3T, an instrument made by Hitachi Limited). The results are shown in Table 1.

Run Nos. 1 and 4 are examples which used the unsaturated polyester resin of this invention ; and Run Nos. 2 and 3 are comparative examples which used unsaturated polyester resins outside the scope of the invention. The results given in Table 1 show that the FRP panels in accordance with this invention have excellent ultraviolet transmissibility, transparency and weatherability.

Table 1-1

| Run No. | Starting materials for the unsaturated polyester resin (parts) | | | | | | Properties of the unsaturated polyester resin | | |
|---|---|---|---|---|---|---|---|---|---|
| | HBPA | PG | PA | HHPA | Me—HHPA | MA | Acid value | OH value | Molecular weight per double bond factor |
| 1 | 60 | 3 | — | — | 29 | 8 | 45 | 55 | 1169 |
| 2 | 60 | 8 | — | — | 14 | 18 | 45 | 45 | 518 |
| 3 | 60 | 3 | 13 | — | 15 | 9 | 45 | 50 | 1037 |
| 4 | 29 | 18 | — | 41 | — | 12 | 45 | 45 | 759 |

Table 1-2

| Run No. | MA in acid component /MMA (mole %) | MA in acid component /MMA (% by weight) | Refractive index of the resin (at 25°C) | Ultra-violet trans-missible wave-length (mµ) | Ultra-violet trans-mittance at 320 mµ (%) | Trans-parency of the FRP panel | Weather-ability (%) (*) | Type of glass |
|---|---|---|---|---|---|---|---|---|
| 1 | 33 | 35/0 | 1.532 | 297—400 | 55 | trans-parent | 60 | E(**) |
| 2 | 66 | 35/0 | 1.532 | 320—400 | 0 | trans-parent | — | E |
| 3 | 33 | 35/0 | 1.540 | 315—400 | 10 | non-trans-parent | 2 | E |
| 4 | 33 | 20/10 | 1.500 | 293—400 | 65 | trans-parent | 90 | C(***) |

Note to Table 1

(* ) : Weatherability is the percent retention of the ultraviolet transmittance at 320 mµ of a sample measured after one year outdoor exposure.

(** ) : Electrical glass fibers having a refractive index of 1.548.

(***) : Alkali-containing glass fibers having a refractive index of 1.515. (Made by Asahi Fiber Glass Co., Ltd.)

Example 2

A reactor equipped with a condenser and a stirrer was charged with 22 parts of propylene glycol (PG), 28 parts of hydrogenated bisphenol A (HBPA), 38 parts of adipic acid (AA) and 12 parts of maleic anhydride (MA), and these materials were heated to 200 °C while blowing nitrogen into the reactor from an opening near its bottom. When the reaction proceeded until the acid value of the reaction mixture became 45, 50 ppm of hydroquinone was added. Then, the reaction mixture was diluted with styrene and methyl methacrylate so that the content of styrene (SM) and the content of methyl methacrylate (MMA) reached 20 % by weight and 10 % by weight, respectively, based on the total amount of the mixture. Thus, an unsaturated polyester resin No. 1 was obtained.

In a similar manner, unsaturated polyester resins Nos. 2 to 5 shown in Table 2 were obtained. In Table 2, PA stands for phthalic anhydride.

Each of these unsaturated polyester resins was mixed with 1 % by weight of t-butyl perpivalate, and after deaeration, the mixture was impregnated into a chopped strand glass mat. The prepreg was cured in a hot air dryer at 90 °C for 20 minutes to produce a flat FRP panel having a thickness of 1 mm and a glass content of 25 % by weight. The ultraviolet transmittance of the resulting FRP plate at ultraviolet-transmissible wavelengths and 320 mµ was measured in the same way as in Example 1. The results are shown in Table 2.

Run Nos. 1 and 5 are examples which used the unsaturated polyester resin of the invention, and Run Nos. 2 to 4 are comparative examples which used the unsaturated polyester resins outside the scope of the invention. The results given in Table 2 show that the FRP panels in accordance with this invention have excellent ultraviolet transmissibility, transparency and weatherability.

Table 2-1

| Run No. | Starting materials for the unsaturated polyester resin (parts) | | | | | Properties of the unsaturated polyester resin | | |
|---|---|---|---|---|---|---|---|---|
| | PG | HBPA | PA | AA | MA | Acid value | OH value | Molecular weight per double bond factor |
| 1 | 22 | 28 | — | 38 | 12 | 45 | 50 | 722 |
| 2 | 22 | 28 | — | 22 | 28 | 45 | 45 | 313 |
| 3 | 22 | 28 | 5 | 33 | 12 | 45 | 50 | 727 |
| 4 | 30 | 20 | 5 | 33 | 12 | 45 | 50 | 727 |
| 5 | — | 65 | — | 26 | 9 | 45 | 55 | 1001 |

Table 2-2

| Run No. | MA in the acid component (mole %) | SM/MMA (wt. %) | Refractive index (at 25°C) | Ultraviolet transmissible wavelengths (mμ) | Ultraviolet transmittance at 320 mμ (%) | Transparency of FRP panel | Weather-ability (%) (*) | Type of glass fibers |
|---|---|---|---|---|---|---|---|---|
| 1 | 33 | 20/10 | 1.500 | 293 — 400 | 65 | transparent | 90 | C (***) |
| 2 | 66 | 20/10 | 1.505 | 320 — 400 | 0 | transparent | = | C |
| 3. | 32 | 20/10 | 1.508 | 315 — 400 | 10 | non-. transparent | 2 | C |
| 4 | 32 | 20/10 | 1.502 | 315 — 400 | 10 | transparent | 2 | C |
| 5 | 33 | 39/1 | 1.532 | 297 — 400 | 55 | transparent | 60 | E (**) |

(*), (**) and (***) : The same as the footnote to Table 1.

## Example 3

To the unsaturated polyester resin No. 1 in Example 2 was added 1 % by weight of t-butyl pivalate, and after deaeration, the mixture was impregnated in a chopped strand glass mat. Both surfaces of the resulting prepreg were covered with an ultraviolet-transmissible polyvinyl fluoride film having a thickness of 25 microns, and then heated in a hot air dryer at 90 °C for 20 minutes to give a fluorocarbon resin film-covered flat FRP panel having a thickness of 1 mm and a glass content of 25 % by weight.

The resulting FRP panel and the FRP panel in Run No. 1 of Example 2 were each subjected to an accelerated weatherability test (under ultraviolet irradiation for 3,000 hours). The test was performed at a temperature of 63 °C with a water spray cycle of 18 minutes/120 minutes. The results are shown in Table 3.

### Table 3

|  | Surface condition | Percent retention of ultraviolet transmittance at 320 m$\mu$ (%) |
|---|---|---|
| FPR panel of Example 3 | No change was noted. | 80 |
| FRP panel of Run No. 1 of Example 2 | The glass fibers slightly came to view. | 80 |

## Example 4

A framework was built by using aluminum pipes as a frame member supporting the entire structure of a greenhouse and aluminum plates as a frame member 2 for securing the FRP panel 3. Each of FRP panels A to E mentioned below was secured to the framework to build each of greenhouses I to V of the type shown in Figure 1 which had a front width of 4.5 m, a depth of 10.8 m, a height, to the roof on each side of the greenhouse, of 2.0 m and a ridge height of 2.95 m.

The FRP panel A was produced in the following manner. An unsaturated polyester was prepared by condensing 13 parts of maleic anhydride (MA), 38 parts of adipic acid (AA), 21 parts of propylene glycol (PG) and 28 parts of hydrogenated bisphenol A (HBPA) in a customary manner. Then, 20 parts of styrene (SM), 6 parts of methyl methacrylate (MMA) and 1 % by weight of t-butyl perpivalate were blended with the unsaturated polyester to form an unsaturated polyester resin. The unsaturated polyester resin was impregnated in a glass roving mat cut to a length of 2 inches. Both surfaces of the prepreg were coated with a polyvinyl alcohol film, and the prepreg was then cured at 90 °C in a hot air dryer for 20 minutes to obtain an FRP plate A having a thickness of 1 mm, a length of 126 cm and, a width of 96 cm, and a glass content of 25 % by weight.

The FRP panels B to E were produced in the same way as in the production of the FRP panel A except that the starting materials shown in Table 4 were used. The FRP plate E is the type now commercially available. In Table 4, PA stands for phthalic anhydride, and HHPA, for hexahydrophthalic anhydride.

The ultraviolet transmittances of the FRP plates A to E at various wavelengths were measured by the same spectro-photometer as used in Example 1. The results are plotted in Figure 2.

Eggplant was cultivated in the greenhouses I to V built as above. In Table 4, the greenhouses I, II and III are examples of the invention, and the greenhouses IV and V are for comparison. The results are shown in Table 4.

(See table 4 page 8 )

Table 4

| Greenhouse No. | FRP panel | Starting materials | | | | | | | | | | | | | | Results of eggplant cultivation in the greenhouse |
| | | Materials for the unsaturated polyester resin (parts) | | | | | | Properties of unsaturated polyester resin | | | Monomers (parts) | | | Refrac-tive index of resin (at 25°C) | Glass fibers | |
| | | PG | HBPA | AA | PA | HHPA | MA | Acid value | OH value | Molecular weight per double bond factor | SM | MMA | Curing catalyst | | | |
| I | A | 21 | 28 | 38 | — | — | 13 | 45 | 50 | 665 | 20 | 6 | t-butyl perpivalate | 1.500 | CR—213—LA—8S | Good violet coloration, and good growth |
| II | B | 36 | — | — | — | 49 | 15 | 45 | 45 | 598 | 20 | 6 | ,, | 1.500 | ,, | ,, |
| III | C | — | 65 | — | — | 25 | 10 | 45 | 50 | 933 | 31 | 2 | ,, | 1.532 | ER—2130—IH—824 (*) | ,, |
| IV | D | 37 | — | — | 48 | — | 15 | 45 | 50 | 597 | 20 | 6 | ,, | 1.532 | ,, | Poor violet coloration and poor growth |
| V | E | 26 | — | — | 25 | — | 19 | 45 | 45 | 482 | 26 | 4 | 6% cobalt naphthenate plus methyl ethyl ketone peroxide | 1.532 | ,, | poor violet coloration, but good growth. |

(*) : Made by Asahi Fiber Glass Co., Ltd. ($n_b{}^{25}$ = 1.556.)

## Claims

1. A greenhouse built by using a clear ultraviolet-transmissible glass fiber-reinforced panel obtained by molding a composition comprising (I) 90 to 60 % by weight of an unsaturated polyester resin and (II) 10 to 40 % by weight of glass fibers, said unsaturated polyester resin (I) being composed of

(A) 50 to 80 % by weight of an unsaturated polyester prepared from an acid component consisting of 10 to 60 mole% of maleic acid or maleic anhydride and/or fumaric acid and 90 to 40 mole% of another aliphatic polybasic acid and/or an alicyclic polybasic acid and an alcohol component composed of an aliphatic polyhydric alcohol and/or an alicyclic polyhydric alcohol, and

(B) 50 to 20 % by weight of an aromatic vinyl monomer or a mixture of 50 to 99.5 % by weight of the aromatic vinyl monomer with 50 to 0.5 % by weight of an acrylic or methacrylic monomer.

2. The greenhouse of claim 1 wherein said other aliphatic polybasic acid than maleic acid or maleic anhydride and fumaric acid and said alicyclic polybasic acid are dicarboxylic acids.

3. The greenhouse of claim 1 wherein said other aliphatic polybasic acid is at least one member selected from the group consisting of adipic acid, succinic acid, azelaic acid and sebacic acid.

4. The greenhouse of claim 1 wherein said alicyclic polybasic acid is at least one member selected from the group consisting of hexahydrophthalic anhydride and methylhexahydrophthalic anhydride.

5. The greenhouse of claim 1 wherein said aliphatic polyhydric alcohol and alicyclic polyhydric alcohols are polyhydric alcohols having 2 to 15 carbon atoms.

6. The greenhouse of claim 1 wherein said aliphatic polyhydric alcohol is at least one member selected from the group consisting of ethylene glycol, propylene glycol, 1,4-butanediol, 1,3-butanediol, 2,3-butanediol, diethylene glycol, dipropylene glycol, triethylene glycol, 1,5-pentanediol, 1,6-hexanediol, neopentyl glycol, 2,2,4-trimethylpentanediol, 1,3-pentaerythritol diallyl ether, glycerol, trimethylene glycol, 2-ethyl-1,3-hexanediol, allyl glycidyl ether and trimethylolpropane.

7. The greenhouse of claim 1 wherein said aliphatic polyhydric alcohol is at least one member selected from the group consisting of 1,4-cyclohexane dimethanol and hydrogenated bisphenol A.

8. The greenhouse of claim 1 wherein said unsaturated polyester resin (I) has a refractive index of 1.495 to 1.538.

9. The greenhouse of claim 1 wherein said glass fibers (II) have a refractive index of 1.512 to 1.557.


## Patentansprüche

1. Gewächshaus, aufgebaut unter Verwendung einer klaren, UV-lichtdurchlässigen, glasfaserverstärkten Platte, die durch Formung einer Masse, die (I) 90 bis 60 Gew.% eines ungesättigten Polyesterharzes und (II) 10 bis 40 Gew.% Glasfasern enthält, erhalten wird, wobei das ungesättigte Polyesterharz (I) aus

(A) 50 bis 80 Gew.% eines ungesättigten Polyesters, der aus einer Säurekomponente, bestehend aus 10 bis 60 Mol% Maleinsäure oder Maleinsäureanhydrid und/oder Fumarsäure und 90 bis 40 Mol% einer anderen aliphatischen mehrbasischen Säure und/oder einer alicyclischen mehrbasischen Säure, und einer Alkoholkomponente, bestehend aus einem aliphatischen mehrwertigen Alkohol und/oder einem alicyclischen mehrwertigen Alkohol, hergestellt wurde, und

(B) 50 bis 20 Gew.% eines aromatischen Vinylmonomeren oder einer Mischung von 50 bis 99,5 Gew.% des aromatischen Vinylmonomeren mit 50 bis 0,5 Gew.% eines Acryl- oder Methacrylmonomeren besteht.

2. Gewächshaus nach Anspruch 1, dadurch gekennzeichnet, daß die genannte andere aliphatische mehrbasische Säure außer Maleinsäure oder Maleinsäureanhydrid und Fumarsäure und die genannte alicyclische mehrbasische Säure Dicarbonsäuren sind.

3. Gewächshaus nach Anspruch 1, dadurch gekennzeichnet, daß die genannte andere aliphatische mehrbasische Säure wenigstens ein Glied aus der Gruppe von Adipinsäure, Bernsteinsäure, Azelainsäure und Sebacinsäure ist.

4. Gewächshaus nach Anspruch 1, dadurch gekennzeichnet, daß die genannte alicyclische mehrbasische Säure wenigstens ein Glied aus der Gruppe von Hexahydrophthalsäureanhydrid und Methylhexahydrophthalsäureanhydrid ist.

5. Gewächshaus nach Anspruch 1, dadurch gekennzeichnet, daß der genannte aliphatische mehrwertige Alkohol und alicyclische mehrwertige Alkohol mehrwertige Alkohole mit 2 bis 15 Kohlenstoffatomen sind.

6. Gewächshaus nach Anspruch 1, dadurch gekennzeichnet, daß der genannte aliphatische mehrwertige Alkohol wenigstens ein Glied aus der Gruppe von Äthylenglykol, Propylenglykol, 1,4-Butandiol, 1,3-Butandiol, 2,3-Butandiol, Diäthylenglykol, Dipropylenglykol, Triäthylenglykol, 1,5-Pentandiol, 1,6-Hexandiol, Neopentylglykol, 2,2,4-Trimethylpentandiol, 1,3-Pentaerythritdiallyläther, Glycerin, Trimethylenglykol, 2-Äthyl-1,3-hexandiol, Allylglycidyläther und Trimethylolpropan ist.

7. Gewächshaus nach Anspruch 1, dadurch gekennzeichnet, daß der genannte alicyclische mehrwertige Alkohol wenigstens ein Glied aus der Gruppe von 1,4-Cyclohexandimethanol und hydriertem Bisphenol A ist.

8. Gewächshaus nach Anspruch 1, dadurch gekennzeichnet, daß das ungesättigte Polyesterharz (I) einen Brechungsindex von 1,495 bis 1,538 aufweist.

9. Gewächshaus nach Anspruch 1, dadurch gekennzeichnet, daß die Glasfasern (II) einen Brechungsindex von 1,512 bis 1,557 aufweisen.

## Revendications

1. Serre construite avec un panneau clair renforcé de fibres de verre laissant passer le rayonnement ultraviolet, obtenu par moulage d'une composition comprenant (I) 90 à 60 % en poids d'une résine de polyester insaturé et (II) 10 à 40 % en poids de fibres de verre, la résine de polyester insaturé (I) étant composée de

(A) à 80 % en poids d'un polyester insaturé préparé à partir d'un composant acide comprenant 10 à 60 moles% d'acide maléique ou d'anhydride maléique et/ou d'acide fumarique et 90 à 40 moles% d'un autre polyacide aliphatique et/ou d'un polyacide alicyclique, et d'un composant alcool comprenant un polyol aliphatique et/ou un polyol alicyclique et

(B) 50 à 20 % en poids d'un monomère vinylique aromatique ou d'un mélange de 50 à 99,5 % en poids du monomère vinylique aromatique avec 50 à 0,5 % en poids du monomère acrylique ou métacrylique.

2. Serre selon la revendication 1 dans laquelle le polyacide aliphatique autre que l'acide ou l'anhydride maléique ou l'acide fumarique, et le polyacide alicyclique, sont tous deux des acides dicarboxyliques.

3. Serre selon la revendication 1 dans laquelle l'autre polyacide aliphatique est constitué par un ou plusieurs acides choisis parmi les acides adipique, succinique, azélaïque et sébacique.

4. Serre selon la revendication 1 dans laquelle le polyacide alicyclique est l'anhydride hexahydrophtalique ou méthylhexahydrophtalique ou un mélange des deux.

5. Serre selon la revendication 1 dans laquelle le polyol aliphatique et le polyol alicyclique ont chacun de 2 à 15 atomes de carbone.

6. Serre selon la revendication 1 dans laquelle le polyol aliphatique est constitué par un ou plusieurs polyols choisis parmi l'éthylène-glycol, le propylène-glycol, le 1,4-butane-diol, le 1,3-butane-diol, le 2,3-butane-diol, le diéthylène-glycol, le dipropylène-glycol, le triéthylèneglycol, le 1,5-pentane-diol, le 1,6-hexane-diol, le néopentylglycol, le 2,2,4-triméthylpentane-diol, l'éther diallylique-1,3 du pentaérythritol, le glycérol, le triméthylène-glycol, le 2-éthyl-1,3-hexane-diol, l'éther allyl glycidylique et le triméthylolpropane.

7. Serre selon la revendication 1 dans laquelle le polyol alicyclique est le 1,4-cyclohexane diméthanol ou le bis-phénol A hydrogéné ou un mélange des deux.

8. Serre selon la revendication 1 dans laquelle la résine du polyester insaturé (I) a un indice de réfraction de 1,495 à 1,538.

9. Serre selon la revendication 1 dans laquelle les fibres de verre (II) ont un indice de réfraction de 1,512 à 1,557.

## Fig. 1

## Fig. 2